Europäisches Patentamt

(19) European Patent Office

Office européen des brevets

(11) Publication number: **0 087 068**
**A1**

(12) **EUROPEAN PATENT APPLICATION**

(21) Application number: **83101244.8**

(22) Date of filing: **09.02.83**

(51) Int. Cl.³: **A 23 L 1/30**
**A 23 L 1/34**

(30) Priority: **12.02.82 US 348268**

(43) Date of publication of application:
**31.08.83 Bulletin 83/35**

(84) Designated Contracting States:
**AT BE CH DE FR GB IT LI LU NL SE**

(71) Applicant: **Beck, Thomas Moses, Dr.**
**5330 Yarmouth Ave.**
**Encino California 91316(US)**

(72) Inventor: **Beck, Thomas Moses, Dr.**
**5330 Yarmouth Ave.**
**Encino California 91316(US)**

(74) Representative: **Lehmann, Klaus, Dipl.-Ing.**
**Patentanwälte Schroeter & Lehmann Postfach 70 17 47**
**Lipowskystrasse 10**
**D-8000 München 70(DE)**

(54) Nutritional supplement.

(57) A nutritional supplement to restore essential nutrients which are depleted as the consequence of excessive intake of alcohol. Fructose can optionally be included to accelerate the metabolism of alcohol. Also anti-oxidants and vitamins can be included to protect the body from free radicals developed in the course of metabolism of the alcohol, and to help a person feel better the next day.

EP 0 087 068 A1

## NUTRITIONAL   SUPPLEMENT

### Field of the Invention

This invention relates to nutritional supplements, and in particular to a nutritional supplement which restores essential nutrients that are depleted as .a consequence of excessive intake of alcohol.

### Background of the Invention

The anti-social consequences of drinking too much ethyl alcohol in too short a time arise principally from a loss of cognitive function.  Readily observed symptoms are aggression, deterioration of judgment, slurred speech, and physical instability.

Police officers subjectively test the loss of cognitive function by the use of field sobriety tests.  Because the penalties for drunkenness under certain conditions are so severe, society has defined drunkenness by a more objectively measurable standard, the blood alcohol level (BAL).  However, it is not the alcohol in the blood, per se, which causes the loss of cognitive function.  Instead it is the disruption of normal neurotransmittal processes resulting from the very rapid depletion of essential nutrients caused by the alcohol.  Thus, if the essential nutrients are maintained, cognitive function need not be so much impaired, even though there is enough alcohol in the blood otherwise to cause such impairment.

Furthermore, the alcohol will remain in the blood until metabolized. There is general agreement that about one ounce of 100 proof ethyl alcohol will usually be metabolized per hour.

Also, excessive consumption of alcohol can disrupt the electolyte balance, and can give rise to formation of free radicals. Both of these situations are deleterious.

It is an object of this invention to provide a nutritional supplement to restore essential nutrients depleted by the excessive intake of alcohol, whereby to enhance normal neurotransmission and as a consequence at least partially counter the deterioration of cognitive function which otherwise would occur.

It is an optional object of the invention to accelerate the metabolism of alcohol, to improve the electrolyte balance, and to frustrate the effectiveness of free radicals formed as a consequence of the intake of alcohol.

## Brief Description of the Invention

A nutritional supplement according to this invention has as its basic dose, the following basic formulation in the amounts indicated:

| | | |
|---|---|---|
| cysteine | 1,000 | mg |
| selenium | 250 | mcg |
| L-Tryptophane | 1,000 | mg |
| L-Tyrosine | 1,000 | mg |

According to a preferred but optional feature of the invention, fructose, between about 2,000 mg and about 8,000 mg can be included to accelerate the metabolism of alcohol.

According to other preferred but optional features of the invention, vitamins, electrolytes, and stimulants can be added.

## Detailed Description of the Invention

The basic formulation and basic dose according to this invention is as follows:

| | |
|---|---|
| cysteine | 1,000 mg |
| selenium | 250 mcg |
| L-Tryptophane | 1,000 mg |
| L-Tyrosine | 1,000 mg |

The above ingredients taken together as a dose appear to have a synergistic effect with one another, and tend to restore the cognitive function, at least in part, in a surprisingly short period of time, certainly in a much shorter time than would be required to recover normally. It is theorized that these ingredients restore nutrients that are essential to normal neurotransmission.

To the above dose there can optionally be added fructose in amounts between about 2,000 mg and about 8,000 mg. It is known that ingestion of fructose will accelerate the metabolism of alcohol. Thus, when added to the basic formulation it provides the additional advantage of shortening the time to which the body is exposed to risk of damage by the alcohol.

Further, it is known that hangover effects can be reduced by certain vitamins. For this purpose, the following vitamins may optionally be added to the basic dose in the amounts indicated: vitamin B1, 1,000 mg; vitamin $B_2$, 200 mg; vitamin C, 3000 mg. Either calcium chloride, 2,000 mg, or calcium gluconate, 200 mg, or both may be added to the basic dose to improve the electrolyte balance.

Caffeine, 400 mg can be added to the basic dose as a general stimulant.

The basic dose is specified to teach an amount which a normal adult will find useful and effective. The ingredients are in the relative proportions provided by the above dry weights. The formulations can be provided in packets as a dry powder, and can be stirred into a glass of plain or carbonated water for quick and convenient consumption. Improved cognitive function will ordinarily be observed in about 20 minutes, even though the BAL might remain nearly as high as before.

Vitamin C is an anti-oxidant. Should more anti-oxidant capacity be desired pyrodoxine B6, 100 mg and/or calcium pangomate, 100 to 200 mg and/or hydergene, 4 mg can be added to the basic formulation.

Also L-glutamine 1,000 mg and/or L-Phenylalanine 500 to 1,000 mg can be added to the basic formulation to provide more nutrients useful in enhancing normal neurocransmission.

Zinc chloride 20 mg and/or magnesium gluconate 100 mg may also be added if desired, to improve electrolyte balance.

Useful formulations will include at least the basic formulation given above. Additional advantages can be secured by adding to it any of the following optinoal substances.

The presently preferred formulation is as follows:

| Vitamin B1 | 1,000 mg |
| Vitamin B2 | 200 mg |
| Cysteine | 1,000 mg |
| Selenium | 250 mcg |
| Vitamin C | 3,000 mg |
| Fructose | 3,000 mg |
| Calcium chloride | 2,000 mg |
| Calcium gluconate | 200 mg |
| L-Tryptophane | 1,000 mg |
| L-Tyrosine | 1,000 mg |

Persons who have taken this preferred formulation after the consumption of substantial amounts of alcohol have been subjected to both objective tests designed to measure their cognitive responses, and to subjective tests such as field sobriety tests. After about 20 minutes from the time of ingesting the supplement, measurable, observable, and surprising improvements in all tests were observed, even though the BAL remained high. Thus, a person legally drunk as defined by the BAL, has a cognitive response which is more nearly associated with that of a sober person.

Of course, more or less than the defined dose can be taken, in which event the amounts given will be regarded as a definition of the proportions of the ingredients. Also, the proportions can reasonably be varied without departing from the invention.

This invention is not to be limited by the specific embodiments disclosed herein, which are given by way of example and not of limitation, but only in accordance with the scope of the appended claims.

I CLAIM:

1.   A nutritional supplement comprising in combination in the approximate proportions stated, the following:

|  |  |
|---|---|
| cysteine | 1,000 mg |
| selenium | 250 mcg |
| L-Tryptophane | 1,000 mg |
| L-Tyrosine | 1,000 mg |

2.   A supplement according to claim 1 additionally including between about 2,000 and 8,000 mg of fructose.

3.   A supplement according to claim 1 additionally including the following in the approximate proportions stated: vitamin B1, 1,000 mg; vitamin $B_2$, 200 mg; and vitamin C, 3,000 mg.

4.   A supplement according to claim 1 additionally including the following in the approximate proportions stated: calcium chloride, 2,000 mg, and/or calcium gluconate, 200 mg.

5.   A supplement according to claim 1 additionally including one or more anti-oxidants in the approximate proportion stated, selected from the group consisting of vitamin C 3,000 mg, pyrodoxine B6, 100 mg, calcium pangamate 100 to 200 mg and hydergene 4 mg.

6.   A supplement according to claim 1 in which L-glutamine 1,000 mg and/or L-phenylalamine, 500 to 1,000 mg is included in the said approximate proportions.

7.   A supplement according to claim 1 in which calcium chloride, 2,000 mg and/or calcium gluconate, 200 mg is included in the said approximate proportions.

8.  A nutritional supplement comprising in combination in the approximate proportions stated, the following:

| | |
|---|---|
| Vitamin B1 | 1,000 mg |
| Vitamin B2 | 200 mg |
| Cysteine | 1,000 mg |
| Selenium | 250 mcg |
| Vitamin C | 3,000 mg |
| Fructose | 2,000 to 8,000 mg |
| Calcium chloride | 2,000 mg |
| Calcium gluconate | 200 mq |
| L-Tryptophane | 1,000 mg |
| L-tyrosine | 1,000 mg |

9.  A supplement according to claim 8 in which the fructose proportion is about 3,000 mg.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | BE-A- 767 442 (AMERICAN GENERAL ENTERPRISES INC.) * Claims 1, 7-10 * | | A 23 L 1/30 <br> A 23 L 1/34 |
| A | FR-A-2 154 397 (CARLO ERBA S.p.A.) * Claims 1-3 * | | |

TECHNICAL FIELDS
SEARCHED (Int. Cl. ³)

A 23 L 1/00

The present search report has been drawn up for all claims

| Place of search | Date of completion of the search | Examiner |
|---|---|---|
| BERLIN | 13-04-1983 | SCHULTZE D |